# EUROPÄISCHE PATENTSCHRIFT

(11) **EP 0 445 667 B1**
(45) Veröffentlichungstag und Bekanntmachung des Hinweises auf die Patenterteilung: **25.01.1995**
(21) Anmeldenummer: 91103108.6
(22) Anmeldetag: 01.03.1991
(51) Int. Cl.: A61C 8/00

(54) **Enossales Zahnimplantat**
Endosseous dental implant
Implant dentaire enossal

(30) Priorität: 07.03.1990 DE 9002676 U
(43) Veröffentlichungstag der Anmeldung: 11.09.1991
(73) Patentinhaber: Thull, Roger, Prof. Dr.-Ing., D-97082 Würzburg (DE)
(72) Erfinder: Thull,Roger,Prof.Dr.-Ing., W-8700 Würzburg (DE); Reuther,Jürgen,Prof.Dr.Dr., W-8700 Würzburg (DE)
(74) Vertreter: Hufnagel, Walter, Dipl.-Ing., Dipl.-Wirtsch.-Ing.

(56) Entgegenhaltungen:
- EP-A- 0 211 676
- DD-A- 257 195
- DE-A- 2 401 323
- DE-A- 2 632 932
- DE-A- 2 838 759
- US-A- 3 643 658

## Beschreibung

Die vorliegende Erfindung betrifft ein enossales Zahnimplantat gemäß dem Oberbegriff des Anspruches 1.

Derartige Zahnimplantate sind allgemein im Stand der Technik bekannt und werden zum Ersatz einzelner Zähne oder zur Halterung eines künstlichen Gebisses in den Kiefer implantiert. Dabei wächst der Verankerungsteil in den Kieferknochen ein und das Zahnfleisch (Gingiva) umgibt den Durchführungsteil oder -abschnitt dieses Zahnimplantats. Das Zahnimplantat kann aus einem einzigen Bauteil aus einheitlichem Material bestehen, beispielsweise aus Titan oder Aluminiumoxid, oder es kann bei zweiteiliger Ausführung aus einem vom Verankerungsteil getrennten Durchführungsteil oder -abschnitt bestehen. Der Verankerungsteil wird im allgemeinen in einer ersten Operation in den Kiefer eingebracht. Bei zweiteiliger Ausführung des Verankerungsteils und der Gingiva-Durchführung wird die Gingiva-Durchführung zu einem zweiten Zeitpunkt implantiert.

Das wesentliche Problem des aus dem Kieferknochen durch das Zahnfleisch in die Mundhöhle reichenden Ersatzes (enossales Zahnimplantat) bildet die Durchführung durch das Zahnfleisch, nämlich die gingivale Durchführung in die Mundhöhle und die langzeitstabile Fixierung des Verankerungsteils im Kiefer, ohne auf die elastische Verankerung durch den natürlicherweise vorhandenen Zahnhalteapparat zurückgreifen zu können. Die gingivale Durchführung ist von Natur aus als sog. Tasche ausgeführt, muß also so dicht sein, daß Bakterien aus der Mundhöhle nicht in den Kieferknochen eindringen können. Die Verankerung muß hohen Kaukräften widerstehen, ohne aus dem Knochenlager des Kiefers auszubrechen oder sich zu lockern.

Hinzu kommt die wichtige Forderung, daß der in die Mundhöhle reichende Teil des Zahnersatzes möglichst ohne Zahnbelag und/oder Zahnstein (Plaque) bleibt, um die bakterielle Besiedlung in Grenzen halten zu können. Die künstliche Oberfläche des Zahnersatzes ist häufig schwieriger durch Zähneputzen sauberzuhalten als die natürliche Zahnoberfläche. Die Folge hiervon ist die vermehrte Ansiedlung von Bakterien, die zur Vergrößerung der Tasche, zum Rückgang der Zahnfleischmasse und letztendlich bei der Einwirkung normaler Kaukräfte zum Verlust des Zahnimplantats führt.

Um eine gute Haftung und einen festen Halt des Zahnimplantats im Kieferknochen zu gewährleisten, wird die Oberfläche des Verankerungsteils mehr oder weniger stark aufgerauht oder es sind Öffnungen oder Poren vorgesehen, die das Einwachsen des Kieferknochens begünstigen.

Es ist weiterhin bekannt, den beispielsweise aus Titan oder Aluminiumoxid bestehenden Verankerungsteil des Zahnimplantats mit Hydroxylapatit oder einen aus Titan bestehenden Verankerungsteil mit Titanteilchen einer Schichtdicke von beispielsweise 100»m bis einige Zehntel Millimeter zu beschichten, um die Verankerungsfläche zu vergrößern. Durch diese Beschichtung ändert sich die Implantatgeometrie und die Topologie der Oberfläche ganz wesentlich.

Ein aus Aluminiumoxid bestehendes enossales Zahnimplantat wird - wie ebenfalls bekannt - nach keramischen Verfahren hergestellt. Hierbei ist es nicht möglich, eine durchgehend dichte Struktur zu erhalten. Vielmehr bleiben je nach Herstellungsmethode mehr oder weniger große Poren erhalten. Dies ist zwar günstig für das Einwachsen des Kieferknochens, jedoch besteht im gingivalen Bereich die Gefahr der Plaquebildung und der Einlagerung von schädlichen Bakterien, was zur Schädigung der angrenzenden Gingiva führen kann.

Bei aus Titan hergestellten enossalen Zahnimplantaten entsteht auf der Oberfläche derselben durch die vorhandenen Körperelektrolyte zum Teil eine passivierende Titandioxidschicht, die bei Relativbewegungen im Knochenlager, die durch den Kauvorgang verursacht sind, zum Teil oder vollständig wieder zerstört wird. Es konnte festgestellt werden, daß an den passivierten Bereichen das Anwachsen von Knochenzellen begünstigt wird. Dies ist vermutlich darauf zurückzuführen, daß biologische Makromoleküle, insbesondere Eiweißmoleküle (Proteine), in diesen Bereich im Gegensatz zu metallischen, nicht passivierten Bereichen, in ihrer natürlichen Struktur (nativ) erhalten bleiben und damit nach Bindung an die passivierte Oberfläche eine für die übrigen Körperbestandteile natürliche Fläche bilden. An diese "biologisierten" Oberflächen nähern sich beispielsweise Knochenzellen im Implantatlager wie an eine natürliche Oberfläche an. Das Immunsystem bleibt weitestgehend inaktiv, so daß sich der Verankerungsteil mit dem Kieferknochen ohne bindegewebige Zwischenschicht an den passivierten Stellen fest inkorporiert. An den nicht passivierten Stellen reagieren die Makromoleküle mit der Oberfläche des Zahnimplantats mit der Folge, daß ein fester Verbund mit dem Kieferknochen nicht begünstigt wird.

Im Bereich des Durchführungsteils oder -abschnitts des Zahnimplantats tritt genau die umgekehrte, schädigende bzw. begünstigende Wirkung auf.

Die sich im Zusammenhang mit der Oxidschicht auf Titan bildende biologische Schicht aus unveränderten Molekülen des Körpermilieus führt bei der gingivalen Durchführung in die Mundhöhle zu vergleichbaren "biologisierten" Oberflächen mit jedoch hier nachteiligen Folgen. Die sich zunächst auf der oxidbedeckten Titanoberfläche bildende "erste biologische" Schicht aus Makromolekülen der Mundhöhle, auch hier bevorzugt Proteine, bietet den in der Mundhöhle befindlichen Bakterien besonders gute Siedlungsbedingungen mit dem Nachteil verstärkter Plaquebildung aus Stoffwechselprodukten der Bakterien und der Gefährdung der gingivalen Abdichtung zum Kieferknochen.

Die Instabilität der Oxidschicht führt hingegen bei der gingivalen Durchführung zu dem positiven Ergebnis, die Ausbildung "biologisierter" Oberflächen und damit die Plaquebildung reduzieren zu können. Dies wird zwar durch häufiges Zähneputzen noch unterstützt. Hierbei muß jedoch berücksichtigt werden, daß die mechanische Wechselwirkung der Bürste, ebenso wie die Wechselwirkung des Kauguts mit der Oberfläche, insbesondere beim verschleißgefährdeten Titan, zu einer Aufrauhung der zuvor polierten Oberfläche führt. Hiermit wird den Makromolekülen und den Bakterien ein mechanischer Halt geboten, mit wiederum der Folge einer Gefährdung der gingivalen Durchführung.

Mit der vorliegenden Erfindung soll demgegenüber die Aufgabe gelöst werden, ein enossales Zahnimplantat der eingangs genannten Art derart auszuführen, daß einerseits auf den Verankerungsteil das Heranwachsen des Kieferknochens begünstigt wird, ohne daß dort schädigende Einflüsse auftreten, und daß andererseits eine Plaquebildung und die Entstehung schädlicher Bakterien im Bereich des Durchführungsteils oder -abschnitts verhindert wird. Darüber hinaus soll die Verschleißfestigkeit dieses Zahnimplantats gegenüber den vorbekannten Ausführungen wesentlich erhöht werden.

Gelöst wird diese Aufgabe durch die im Kennzeichen des Anspruches 1 angegebenen Markmale.

Durch die halbleitende und damit hochohmige Ausbildung des Verankerungsteils oder zumindest der Oberfläche bzw. Oberflächenschicht desselben wird die Anlagerung von Körperzellen begünstigt, ohne daß eine Schädigung der Makromoleküle eintritt, so daß eine einwandfreie Inkorporation des Implantats in den Kiefer erfolgt.

Durch die Ausbildung des Durchführungsteils oder -abschnitts oder zumindest eines Teils von dessen Umfangsoberfläche bzw. Umfangsoberflächenschicht aus einem Material mit metallischer oder nahezu metallischer Elektronenleitfähgikeit wird der Ansatz von nativen Makromolekülen dort verhindert oder zumindest stark reduziert, so daß eine Schädigung der Gingiva nicht mehr zu befürchten ist und eine mechanische Beschädigung durch Zähneputzen ebenfalls weitestgehend ausgeschlossen ist.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Figur 1: die Schnittdarstellung eines in einen Kiefer eingesetzten enossalen Zahnimplantats,
- Figuren 2 und 3: je einen kreisförmigen Ausschnitt der Figur 1 in vergrößerter Darstellung,
- Figur 4: eine Seitenansicht eines enossalen Zahnimplantats und
- Figuren 5 und 6: jeweils kreisförmige Ausschnitte der Figur 1 entsprechend der Darstellung der Figur 2 mit Abwandlungen der Ausbildung der Oberflächenschichten im Durchführungsteil oder -abschnitt.

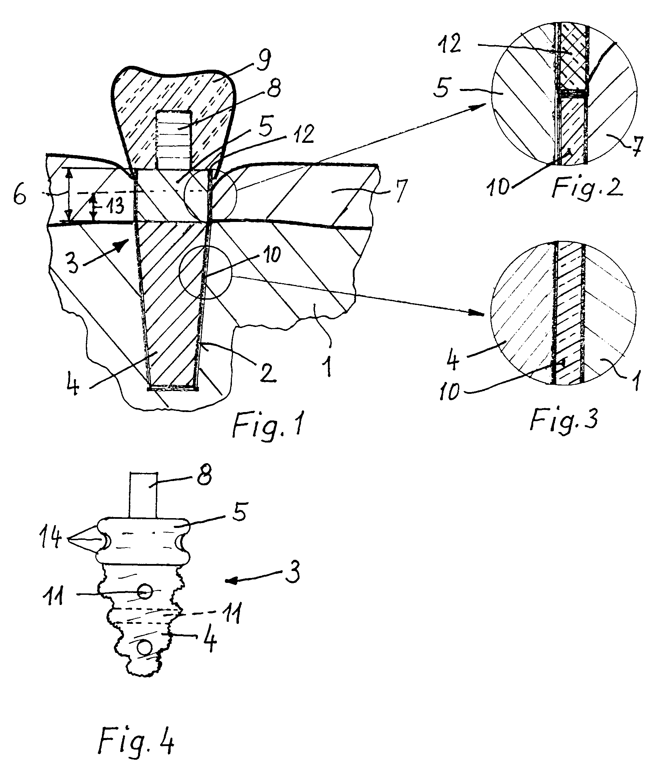

In Figur 1 ist mit 1 ein Ausschnitt des Kieferknochens bezeichnet, in dem ein Implantatlager 2, beispielsweise in Form einer konischen Bohrung, eingebracht ist. In das Implantatlager 2 ist ein enossales Zahnimplantat 3 mit einem der Form des Implantatlagers 2 angepaßten Verankerungsteil 4 eingesetzt. An den Verankerungsteil 4 schließt ein Durchführungsteil oder -abschnitt 5 an, dessen Gesamthöhe 6 etwa der Dicke des den Kieferknochen 1 bedeckenden Zahnfleisches 7 entspricht.

Vom Durchführungsteil oder -abschnitt 5 ragt ein als Zapfen ausgebildetes Befestigungsmittel 8 in die Mundhöhle, auf den ein Zahnersatz 9 mit in der Zahnprothetik üblichen Materialien aufgesteckt und in bekannter Weise befestigt, insbesondere zementiert ist. Anstelle eines Zapfens kann als Befestigungsmittel 8 auch eine Bohrung im Zahnimplantat 3, insbesondere eine Gewindebohrung, vorgesehen sein, in die bzw. in das ein mit einem Ansatz versehener Zahnersatz einsetzbar und befestigbar ist.

Die Oberfläche 10 des Verankerungsteils 4 ist zerklüftet, aufgerauht bzw. mit beliebigen unregelmäßigen Oberflächengestaltungen und/oder mit Poren bzw. mit Bohrungen 11 (siehe Fig. 4) versehen, die eine gute Inkorporation des Verankerungsteils 4 in den Kieferknochen 1 begünstigen. Die Umfangsoberfläche 12 des Durchführungsteils oder -abschnitts 5 ist glatt und poliert. Bestimmte Strukturierungen sind auch dort möglich, wie noch ausgeführt werden wird.

Bei dem in Figur 1 dargestellten Ausführungsbeispiel besteht das Zahnimplantat 3 aus zwei unterschiedlichen Materialien für den Verankerungsteil 4 und den Durchführungsteil oder -abschnitt 5.

Erfindungsgemäß besteht der Verankerungsteil 4 oder zumindest dessen Oberfläche bzw. Oberflächenschicht 10 aus einem halbleitenden Material mit relativ niedriger Elektronenleitfähigkeit. Vorzugsweise werden hierfür Halbleitermaterialien verwendet oder als Schicht aufgebracht, deren spezifische Leitfähigkeit (Ohm.m)⁻¹ im Bereich von etwa 10⁻⁷ bis 10⁺², deren Ladungsträgerdichte etwa 10¹³ bis 10²² (m⁻³), deren Ladungsträgerbeweglichkeit beispielsweise etwa 10⁻¹ (m²/Vs) und deren Temperaturkoeffizient der Leitfähigkeit negativ ist. Die Struktur dieses Halbleitermaterials kann amorph, kristallin oder polykristallin sein, jedoch ist die amorphe Struktur zu bevorzugen.

Weiterhin besteht der Durchführungsteil oder -abschnitt 5 oder zumindest dessen Umfangsoberfläche bzw. Umfangsoberflächenschicht 12 aus einem Metall aus einer Metallverbindung oder aus einer metallisch leitenden Schicht mit einer spezifischen Leitfähigkeit im Bereich von etwa 10⁵ bis 10⁷ (Ohm.m)⁻¹, also im Bereich metallischer Leitfähigkeit. Die Ladungsträgerdichte beträgt vorzugsweise etwa 10²⁹ (m⁻³) und die Ladungsträgerbeweglichkeit liegt bei etwa 10⁻³(m²/Vs). Der Temperaturkoeffizient der Leitfähigkeit ist positiv und beträgt beispielsweise ca. 4.10⁻³(K⁻¹). Bevorzugt werden hier kristalline oder polykristalline Strukturen angewendet, obwohl auch amorphe Strukturen grundsätzlich geeignet sind.

Als Komponenten für die Halbleitermaterialien für die Oberfläche bzw. Oberflächenschicht 10 des Verankerungsteils 4 oder für den Verankerungsteil 4 insgesamt werden geeignete Metalle oder Metallegierungen oder ein oder mehrere Metalloxide, -nitride oder -karbide oder Mischungen von wenigstens zwei dieser Komponenten verwendet, die entweder als solche bereits halbleitende Eigenschaften besitzen oder bei denen die halbleitenden Eigenschaften durch eine geeignete Herstellung oder Behandlung, beispielsweise durch Dotierung mit einem oder mehreren Fremdatomen und/oder durch Ionenimplantation und/oder durch nichtstöchiometrische Zusammensetzung von Metallverbindungen, erzeugt wird. Diese Maßnahmen sind in der Halbleitertechnik bei der Herstellung elektronischer Bauelemente bekannt.

Bevorzugte Metalle für den Durchführungsteil oder -abschnitt 5 oder für dessen Oberfläche bzw. Oberflächenschicht 12 sind diejenigen aus der Gruppe der Ventilmetalle, nämlich Titan, Niob, Tantal, Zirkonium, Haffnium und Wolfram.

Infolge der möglichen Leitfähigkeit werden für den Verankerungsteil 4 vorzugsweise Metalloxide, insbesondere Titan-Zirkon-Oxid (Ti, Zr) O und/oder Titan-Niob-Oxid (Ti, Nb) O und für den Durchführungsteil oder -abschnitt 5, insbesondere Metallnitride und/oder -oxinitride, beispielsweise Titannitrid, Titanoxinitrid oder Titan-Nioboxinitrid verwendet.

Beispielsweise kann ein Implantat 3 aus Titan bestehen, dessen Oberfläche bzw. Oberflächenschicht 10 im Bereich des Verankerungsteils 4 oxidiert ist und zwar derart, daß ein Sauerstoffdefizit eintritt (TiO₂₋ₓ), wobei der Bereich der Umfangsoberfläche bzw. Umfangsoberflächenschicht 12 des Durchführungsteils oder -abschnitts 5 zu Titannitrid bzw. zu Titanoxinitrid nitriert ist.

Es hat sich als günstig herausgestellt, einen Teil des Durchführungsteils oder -abschnitts 5 bis zu einer Höhe 13 von etwa 10 % bis 30 %, maximal etwa 50 %, der Gesamthöhe 6 des Durchführungsteils oder -abschnitts 5 mit einem Halbleitermaterial zu beschichten oder aus diesem herzustellen, wie dies für den Verankerungsteil 4 bzw. dessen Oberfläche bzw. Oberflächenschicht 10 verwendet wird. Dies hat den Vorteil, daß das Zahnfleisch einen dichten, für Bakterien undurchdringlichen Abschluß bildet.

Wenn am Verankerungsteil 4 nur halbleitende Oberflächen vorgesehen oder als Schichten aufgebracht sind, beträgt die Dicke dieser Halbleiterschichten etwa 1 bis 20 »m.

Zur Erhöhung der Haftung des Kieferknochens 1 am Verankerung teil 4 bzw. des Zahnfleisches 7 am Durchführungsteil oder -abschnitt 5 kann deren Oberfläche strukturiert sein. In Figur 4 ist beispielsweise der Verankerungsteil 4 konisch verlaufend mit einer schraubenförmigen Oberfläche ausgebildet und mit Bohrungen 11 versehen, wobei die Oberfläche außerdem zerklüftet ist. Die Umfangsoberfläche bzw. Umfangsoberflächenschicht 12 des Durchführungsteils oder -abschnitts 5 ist mit umlaufenden Wellen bzw. Rillen 14 versehen und poliert. Bei einer Beschichtung einer polierten Oberfläche in der angegebenen Schichtdicke von etwa 1 bis 20 »m wird die Topographie der Oberfläche nicht verändert, sondern praktisch exakt nachgebildet, so daß das polierte Finish beibehalten bleibt. Entsprechend bleibt eine strukturierte Oberfläche, beispielsweise auf dem Verankerungsteil 4, ebenfalls erhalten.

Die Figuren 2 und 3 zeigen je einen kreisförmigen Ausschnitt des Zahnimplantats 3 gemäß Figur 1.

In der Figur 2 ist mit 7 das Zahnfleisch, mit 10 die Oberfläche bzw. Oberflächenschicht des Verankerungsteils 4 und mit 12 die Oberfläche bzw. Oberflächenschicht des Durchführungsteils oder -abschnitts 5 dargestellt.

In Figur 3 ist mit 1 der Kieferknochen, mit 10 die Oberfläche bzw. Oberflächenschicht des Verankerungsteils 4 und mit 4 der eigentliche Verankerungsteil dargestellt.

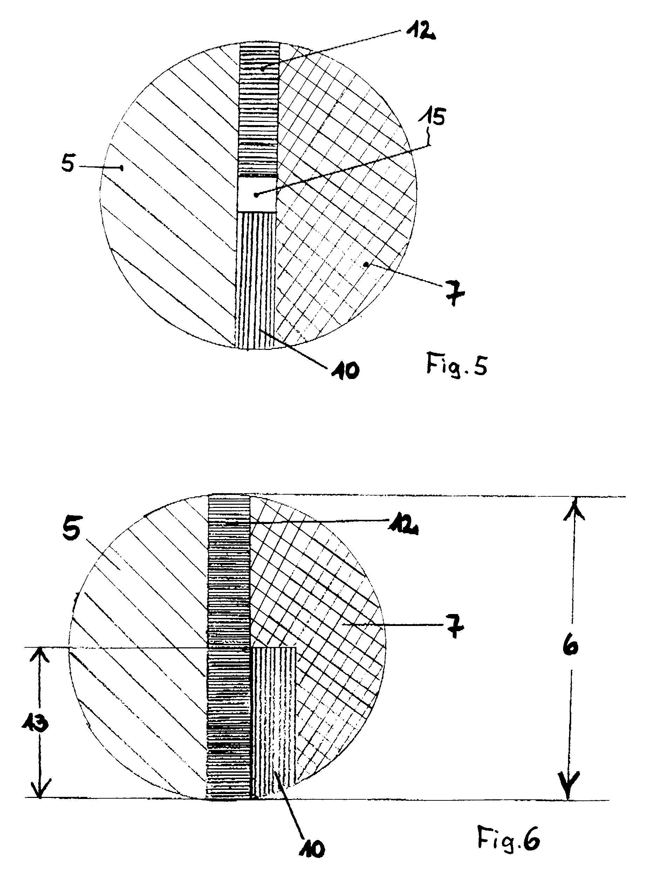

Die Figur 5 zeigt einen kreisförmigen Ausschnitt der Figur 1 entsprechend der Darstellung der Figur 2 in vergrößertem Maßstab.

Die Anordnung der Schichten im Durchführungsteil oder -abschnitt 5 ist dort so getroffen, daß die Umfangsoberflächenschicht 12 des Durchführungsteils oder -abschnitts 5 von der Oberflächenschicht 10 des Verankerungsteils 4 durch einen unbeschichteten Teil 15 des Durchführungsteils oder -abschnitts 5 getrennt ist. Die Länge des unbeschichteten Teils 15 beträgt ca. ein bis mehrere Millimeter, liegt also bevorzugt im Bereich zwischen ca. 1 bis 5 mm.

Die Figur 6 zeigt einen kreisförmigen Ausschnitt der Figur 1 entsprechend der Darstellung der Figur 2 ebenfalls in vergrößertem Maßstab.

Die Anordnung der Schichten im Durchführungsteil oder -abschnitt 5 ist dort so getroffen, daß die Umfangsoberflächenschicht 12 des Durchführungsteils oder -abschnitts 5 diesen Durchführungsteil oder -abschnitt 5 vollständig bedeckt oder wenigstens annähernd über die Höhe 13 von der Oberflächenschicht 10 des Verankerungsteils 4 koaxial umgeben ist.

Diese Ausgestaltung ermöglicht es, daß bei einer Taschenbildung im Zahnfleisch 7,der die Schicht 12 aus metallisch leitendem Material übergreifende Teil der Schicht 10 aus halbleitendem Material so weit wie nötig abgetragen werden kann, ohne daß die weitere, innenliegende Schicht 12 aus metallisch leitendem Material verletzt wird. Die Verhältnisse im Mund- und Kieferbereich können also über einen sehr langen Zeitraum optimal gehalten werden, da Anpassungen der überlappenden Oberflächenschicht 10 von Fall zu Fall vorgenommen werden können, ohne daß die Anfangsbedingungen grundsätzlich nachteilig verändert werden würden.

Mit der erfindungsgemäßen Ausbildung des enossalen Zahnimplantats werden im wesentlichen folgende Vorteile erzielt:
Durch die Materialwahl und die Oberflächengestaltung des Durchführungsteils oder -abschnitts 5 wird die Bildung von Zahnbelag oder Zahnstein weitestgehend vermieden. Durch Verwendung polierter Strukturelemente (siehe beispielsweise Rillen 14 der Figur 4) kann die Abdichtung gegen die Mundhöhle durch dort einwachsendes gingivales Gewebe noch verbessert werden. Eine für das Implantat schädliche bakterielle Besiedlung wird vermieden, weil durch die Materialwahl für den Durchführungsteil oder -abschnitt 5 ein für die Ansiedlung von Bakterien ungünstiges "Milieu" in der Mundhöhle geschaffen wird.

Andererseits wird im Verankerungsteil 4 aufgrund der Materialwahl und Materialstruktur das Heranwachsen des vitalen Kieferknochens begünstigt. Maßgebend hierfür sind neben der Oberflächenstruktur insbesondere das Zusammenwirken der unterschiedlichen elektrischen Leitfähigkeiten und der elektronischen Strukturen des Verankerungsteils 4 einerseits und des Durchführungsteils oder -abschnitts 5 andererseits.

Günstig ist, wenn bei Verwendung unterschiedlicher Materialien für den Verankerungsteil 4 und den Durchführungsteil oder -abschnitt 5 bzw. für die Resthöhe 6-13 des Durchführungsteils oder -abschnitts 5 diese Materialien ähnliche elektrochemische Eigenschaften aufweisen, d.h. in der elektro-mechanischen Spannungsreihe möglichst eng benachbart sind.

Wie sich aus den vorstehenden Ausführungen ergibt, können die beschriebenen Oberflächen des Verankerungsteils 4 und des Durchführungsteils oder -abschnitts 5 entweder durch Bearbeitung entsprechender Vollkörper oder durch entsprechende Beschichtungen hergestellt sein.

## Patentansprüche

1. Enossales Zahnimplantat,bestehend aus einem in den Kiefer einsetzbaren Verankerungsteil (4), einem im implantierten Zustand das Zahnfleisch durchdringenden Durchführungsteil oder -abschnitt (5) und einem von der Mundhöhle aus zugänglichen Befestigungsteil (8) für einen mit dem Implantat fest zu verbindenden Zahnersatz, dadurch gekennzeichnet, daß die Oberfläche bzw. Oberflächenschicht (10) des Verankerungsteils (4) zerklüftet, aufgerauht oder mit sonstigen unregelmäßigen Oberflächengestaltungen versehen ist, daß die Umfangsoberfläche bzw. Umfangsoberflächenschicht (12) des Durchführungsteils oder -abschnitts (5) glatt und poliert ist, daß zumindest die Oberfläche bzw. Oberflächenschicht (10) des Verankerungsteils (4) und gegebenenfalls die Umfangsoberfläche bzw. Umfangsoberflächenschicht (12) des Durchführungsteils oder -abschnitts (5) bis zu einer Höhe von maximal etwa 50 Prozent seiner Gesamthöhe (6) aus einem Material mit halbleitenden Eigenschaften und im Vergleich zur metallischen Elektronenleitfähigkeit relativ geringer Elektronenleitfähigkeit besteht oder mit diesem beschichtet ist, und daß die Umfangsoberfläche bzw. Umfangsoberflächenschicht (12) bzw. die verbleibende Resthöhe von mindestens etwa 50 Prozent des Durchführungsteils oder -abschnitts (5) aus einem Material mit metallischer oder nahezu metallischer Elektronenleitfähigkeit besteht oder mit diesem beschichtet ist.

2. Zahnimplantat nach Anspruch 1, dadurch gekennzeichnet, daß die halbleitenden Materialien aus wenigstens einem Metall oder aus wenigstens einer Metallegierung oder aus einem oder mehreren Metalloxiden, Metallnitriden, Metallkarbiden oder aus Mischungen von wenigstens zwei der genannten Komponenten bestehen, und daß die geforderte Elektronenleitfähigkeit durch Dotierung wenigstens einer der Komponenten mit Fremdatomen und/oder durch Ionenimplantation und/oder durch nichtstöchiometrische Zusammensetzung wenigsten einer Metallverbindung erzeugt ist.

3. Zahnimplantat nach Anspruch 1 oder 2, dadurch gekennzeichnet, daß das Metall oder wenigstens eines der Metalle der Komponenten aus einem Ventilmetall besteht.

4. Zahnimplantat nach Anspruch 3, dadurch gekennzeichnet, daß das Metall aus Titan, Niob, Tantal, Zirkonium, Haffnium oder Wolfram oder aus einer Mischung oder aus einer Legierung von wenigstens zwei dieser Metalle besteht oder diese enthält.

5. Zahnimplantat nach einem der Ansprüche 1 bis 4, dadurch gekennzeichnet, daß zumindest die Oberfläche bzw. Oberflächenschicht (10) des Verankerungsteils (4) und gegebenenfalls bis zu maximal etwa 50 % der Höhe (6) des Durchführungsteils oder -abschnitts (5) aus wenigstens einem Metalloxid, insbesondere aus wenigstens einer der Verbindungen Titan-Zirkon-Oxid (Ti, Zr) O oder aus Titan-Niob-Oxid (Ti, Nb) O besteht oder diese enthält.

6. Zahnimplantat nach einem der Ansprüche 1 bis 4, dadurch gekennzeichnet, daß zumindest die Umfangsoberfläche bzw. Umfangsoberflächenschicht (12) bzw. die Resthöhe (6-13) des Durchführungsteils oder -abschnitts (5) aus wenigstens einem Metallnitrid oder Metalloxinitrid, insbesondere aus einer der Verbindungen Titan-Nitrid (Ti, N), Titanoxinitrid (Ti, O,N) oder Titan-Niob-Oxynitrid (Ti, Nb, O, N) besteht oder diese enthält.

7. Zahnimplantat nach einem der Ansprüche 1 bis 6, dadurch gekennzeichnet, daß der Verankerungsteil (4) und der Durchführungsteil oder -abschnitt (5) oder die Resthöhe (6-13) des Durchführungsteils oder -abschnitts (5) aus voneinander unterschiedlichen, fest miteinander verbundenen Materialien bestehen.

8. Zahnimplantat nach einem der Ansprüche 1 bis 7, dadurch gekennzeichnet, daß bei in Form einer Beschichtung vorgesehenen halbleitenden Materialien die Schichtstärke etwa 1 bis 20 »m beträgt.

9. Zahnimplantat nach einem der Ansprüche 1 bis 8, dadurch gekennzeichnet, daß bei Verwendung unterschiedlicher Materialien für den Verankerungsteil (4) und den Durchführungsteil oder -abschnitt (5) bzw. für die Resthöhe (6-13) des Durchführungsteils oder -abschnitts (5) diese Materialien ähnliche elektrochemische Eigenschaften aufweisen, d.h. in der elektro-mechanischen Spannungsreihe möglichst eng benachbart sind.

10. Zahnimplantat nach einem der Ansprüche 1 bis 9, dadurch gekennzeichnet, daß der Verankerungsteil (4) und/oder der Durchführungsteil oder -abschnitt (5) hafterhöhend strukturiert sind bzw. ist.

11. Zahnimplantat nach Anspruch 10, dadurch gekennzeichnet, daß der Verankerungsteil (4) Einkerbungen und/oder Durchbrechungen (11) aufweist.

12. Zahnimplantat nach Anspruch 10 oder 11, dadurch gekennzeichnet, daß der Verankerungsteil (4) als Schraubgewinde ausgebildet ist.

13. Zahnimplantat nach einem der Ansprüche 1 bis 12, dadurch gekennzeichnet, daß die Umfangsoberflächenschicht (12) des Durchführungsteils oder -abschnitts (5) von der Oberflächenschicht (10) des Verankerungsteils (4) durch einen unbeschichteten Teil (15) des Durchführungsteils oder -abschnitts (5) getrennt ist.

14. Zahnimplantat nach einem der Ansprüche 1 bis 12, dadurch gekennzeichnet, daß die Umfangsoberflächenschicht (12) des Durchführungsteils oder -abschnitts (5) diesen Durchführungsteil oder -abschnitt (5) vollständig bedeckt und wenigstens annähernd über die Höhe (13) von der Oberflächenschicht (10) des Verankerungsteils (4) koaxial umgeben ist.

## Claims

1. An endosteal dental implant consisting of an anchoring part (4) which may be inserted in the bone of the jaw, a lead-through part or portion (5) which in the implanted state penetrates the gum, and a fastening part (8) accessible from the oral cavity for an artificial tooth to be connected firmly to the implant, characterized in that the surface or surface layer (10) of the anchoring part (4) is full of fissures or is roughened or provided with other irregular surface formations, that the surface or surface layer (12) at the circumference of the lead-through part or portion (5) is smooth and polished, that at least the surface or surface layer (10) of the anchoring part (4) and if necessary the surface or surface layer (12) at the circumference of the lead-through part or portion (5) up to a maximum height of about 50 percent of its total height (6), consists of a material having semiconductive properties and of relatively low n-type conductivity in comparison with metallic n-type conductivity or is coated with it, and that the surface or surface layer (12) or the remaining height of at least about 50 percent at the circumference of the lead-through part or portion (5) consists of a material of metallic or nearly metallic n-type conductivity or is coated with it.

2. A dental implant as in Claim 1, characterized in that the semiconductive materials consist of at least one metal or of at least one metal alloy or of one or more metal oxides, metal nitrides or metal carbides or of mixtures of at least two of the aforesaid constituents, and that the required n-type conductivity is generated by doping at least one of the constituents with foreign atoms and/or by ion implantation and/or by non-stoichiometric composition of at least one metal compound.

3. A dental implant as in Claim 1 or 2, characterized in that the metal or at least one of the metals of the constituents consists of a valve metal.

4. A dental implant as in Claim 3, characterized in that the metal consists of titanium, niobium, tantalum, zirconium, hafnium or tungsten or of a mixture or of an alloy of at least two of these metals or contains them.

5. A dental implant as in one of the Claims 1 to 4, characterized in that at least the surface or surface layer (10) of the anchoring part (4) and if necessary up to a maximum of about 50 % of the height (6) of the lead-through part or portion (5) consists of at least one metal oxide, in particular of at least one of the compounds titanium-zirconium oxide (Ti, Zr) O or of titanium-niobium oxide (Ti, Nb) O or contains them.

6. A dental implant as in one of the Claims 1 to 4, characterized in that at least the surface or surface layer (12) or the remaining height (6-13) at the circumference of the lead-through part or portion (5) consists of at least one metal nitride or metal oxinitride, in particular of one of the compounds titanium nitride (Ti, N), titanium oxinitride (Ti, O, N) or titanium-niobium oxinitride (Ti, Nb, O, N) or contains them.

7. A dental implant as in one of the Claims 1 to 6, characterized in that the anchoring part (4) and the lead-through part or portion (5) or the remaining height (6-13) of the lead-through part or portion (5) consist of materials which differ from one another but are firmly connected together.

8. A dental implant as in one of the Claims 1 to 7, characterized in that in the case of semiconductive materials provided in the form of a coating the thickness of layer amounts to about 1 to 20 »m.

9. A dental implant as in one of the Claims 1 to 8, characterized in that in the event of different materials being employed for the anchoring part (4) and the lead-through part or portion (5) or for the remaining height (6-13) of the lead-through part or portion (5) these materials exhibit similar electrochemical properties i.e., they are as closely adjacent as possible in the electromechanical electromotive series.

10. A dental implant as in one of the Claims 1 to 9, characterized in that the anchoring part (4) and/or the lead-through part or portion (5) are/is of an adhesion-promoting structure.

11. A dental implant as in Claim 10, characterized in that the anchoring part (4) exhibits notches and/or openings (11).

12. A dental implant as in Claim 10 or 11, characterized in that the anchoring part (4) is formed as a screw thread.

13. A dental implant as in one of the Claims 1 to 12, characterized in that the surface layer (12) at the circumference of the lead-through part or portion (5) is separated from the surface layer (10) of the anchoring part (4) by an uncoated part (15) of the lead-through part or portion (5).

14. A dental implant as in one of the Claims 1 to 12, characterized in that the surface layer (12) at the circumference of the lead-through part or portion (5) covers this lead-through part or portion (5) completely arid is surrounded coaxially at least approximately over the height (13) by the surface layer (10) of the anchoring part (4).

## Revendications

1. Implant dentaire enossal comprenant une pièce d'ancrage (4) qui se monte dans la mâchoire, une pièce ou segment de passage (5) traversant la gencive à l'état implanté et une pièce de fixation (8) accessible de la cavité buccale pour une prothèse dentaire à relier solidairement à l'implant, caractérisé en ce que,
la surface supérieure ou la couche de surface supérieure (10) de la pièce d'ancrage (4) comporte des cavités, rendues rugueuses ou présente toute autre structure de surface irrégulière, la surface supérieure ou la couche de surface supérieure (12) de la pièce ou du segment traversant (5) est lisse et polie et au moins la surface ou couche de surface supérieure (10) de la pièce d'ancrage (4) et le cas échéant la surface supérieure périphérique ou la couche de surface supérieure périphérique (12) de la pièce ou du segment de passage (5) est réalisée jusqu'à une hauteur correspondant au maximum à 50 % de sa hauteur totale (6) en un matériau ayant des caractéristiques semi-conductrices et une conductivité électronique relativement plus faible en comparaison de la conductivité électronique métallique, ou encore est revêtue d'une matière ayant de telles caractéristiques et la surface supérieure périphérique ou la couche de surface supérieure périphérique (12) ou la hauteur résiduelle d'au moins environ 50 % de la pièce ou du segment de passage (5) est en un matériau ayant une conductivité électronique métallique ou voisine de celle-ci ou encore est revêtue d'une matière ayant de telles caractéristiques.

2. Implant dentaire selon la revendication 1, caractérisé en ce que les matières semi-conductrices sont formées d'au moins un métal et d'au moins un alliage métallique ou d'un ou plusieurs oxydes métalliques, nitrures métalliques, carbures métalliques ou autres mélanges d'au moins deux des composants indiqués ci-dessus et en ce que la conductivité électronique recherchée est obtenue par dopage d'au moins l'un des composants avec des atomes étrangers et/ou des implantations ioniques et/ou par une composition non stoechiométrique d'au moins une combinaison métallique.

3. Implant dentaire selon la revendication 1 ou 2, caractérisé en ce que le métal ou au moins l'un des métaux des composants est en un métal de barrage.

4. Implant dentaire selon la revendication 3, caractérisé en ce que le métal est du titane, du niobium, du tantale, du zirconium, du hafnium ou du tungstène ou encore un mélange ou un alliage d'au moins deux de ces métaux ou qu'il contient ces métaux.

5. Implant dentaire selon l'une des revendications 1 à 4, caractérisé en ce qu'au moins la surface supérieure ou la couche de surface supérieure (10) de la pièce d'ancrage (4) et le cas échéant jusqu'à un maximum environ de 50 % de la hauteur (6) de la pièce de passage ou du segment de passage (5), est réalisée au moins en un oxyde métallique notamment en au moins l'une des combinaisons oxyde de titane-zirconium (Ti, Zr) O ou oxyde de titane-niobium (Ti, Nb) O ou contient de tels oxydes.

6. Implant dentaire selon l'une des revendications 1 à 4, caractérisé en ce qu'au moins la surface extérieure périphérique ou la couche de surface extérieure périphérique (12) ou la hauteur résiduelle (6-13) de la pièce ou du segment de passage (5) est réalisée en au moins un nitrure métallique ou un nitrure d'oxyde métallique, notamment en l'une des liaisons titane-nitrure (Ti, N), titane oxyde nitrure (Ti, O, N) ou titane niobium oxyde nitrure (Ti, Nb, O, N) ou contient ces combinaisons.

7. Implant dentaire selon l'une des revendications 1 à 6, caractérisé en ce que la pièce d'ancrage (4) et la pièce ou le segment de passage (5) ou la hauteur résiduelle (6-13) de la pièce ou du segment de passage (5) sont réalisés dans des matériaux différents reliés solidairement.

8. Implant dentaire selon l'une des revendications 1 à 7, caractérisé en ce que pour des matériaux semi-conducteurs existant sous forme de revêtement l'épaisseur de couche est de l'ordre de 1 à 20 microns.

9. Implant dentaire selon l'une des revendications 1 à 8, caractérisé en ce que lorsqu'on utilise des matériaux différents pour la pièce d'ancrage (4) et la pièce ou le segment de passage (5) ou pour la hauteur résiduelle (6-13) de la pièce ou du segment de passage (5), ces matériaux présentent des caractéristiques électrochimiques analogues, c'est-à-dire qu'ils sont aussi voisins que possible dans la série des tensions électromécaniques.

10. Implant dentaire selon l'une des revendications 1 à 9, caractérisé en ce que la pièce d'ancrage (4) et/ou la pièce ou le segment de passage (5) ont une structure augmentant l'accrochage.

11. Implant dentaire selon la revendication 10, caractérisé en ce que la pièce d'accrochage (4) comporte des encoches et/ou des interruptions (11).

12. Implant dentaire selon la revendication 10 ou 11, caractérisé en ce que la pièce d'ancrage (4) est réalisée en forme de filet de vis.

13. Implant dentaire selon l'une des revendications 1 à 12, caractérisé en ce que la couche de surface extérieure périphérique (12) de la pièce ou du segment de passage (5) est séparée de la couche de surface extérieure (10) de la pièce d'ancrage (4) par une partie (15) non revêtue de la partie ou du segment (5) de passage.

14. Implant dentaire selon l'une des revendications 1 à 12, caractérisé en ce que la couche de surface extérieure périphérique (12) de la pièce ou du segment de passage (5) recouvre complètement cette pièce ou ce segment de passage (5) et est entourée coaxialement au moins approximativement sur la hauteur (13) de la couche de surface supérieure (10) de la pièce d'accrochage (4).
